# EUROPÄISCHE PATENTSCHRIFT

(11) **EP 1 369 952 B1**
(45) Veröffentlichungstag und Bekanntmachung des Hinweises auf die Patenterteilung: **13.02.2008**
(21) Anmeldenummer: 03010650.4
(22) Anmeldetag: 13.05.2003
(51) Int. Cl.: H01M 10/48, G01F 23/02

(54) **Ladezustandsanzeiger für eine Batterie**
State of charge indicator for a battery
Indicateur de l'état de charge d'une batterie

(30) Priorität: 03.06.2002 DE 10224662
(43) Veröffentlichungstag der Anmeldung: 10.12.2003
(73) Patentinhaber: VB Autobatterie GmbH & Co. KGaA, 30419 Hannover (DE)
(72) Erfinder: Streuer, Peter, 30559 Hannover (DE)
(74) Vertreter: Gerstein, Hans Joachim

(56) Entgegenhaltungen:
- EP-A- 1 120 641
- DE-U1- 29 808 883
- US-A- 3 915 753

## Beschreibung

Die Erfindung betrifft einen Ladezustandsanzeiger für eine mit einem flüssigen Elektrolyten ausgestattete Batterie, mit einem transparenten Sichtstab, der einem ersten Ende eine Beobachtungsfläche und einem zweiten Ende eine sich an eine zylindrische Mantelfläche anschließende, durch eine konische Reflektionsfläche gebildete Spitze aufweist, und mit einem am zweiten Ende des Sichtstabes angebrachten, vom Elektrolyten durchströmbaren Kugelkäfig, in dem wenigstens ein schräg zur Längsrichtung des Lichtstabes angeordneter Kugelführungskanal für wenigstens eine Kugel mit einem definierten spezifischen Gewicht ausgebildet ist, der sich über die Höhe der Spitze des Sichtstabes erstreckt und stirnseitige und untere Begrenzungen sowie eine mit einer Unterbrechung für das zweite Ende des Sichtstabes versehene obere Begrenzungswand aufweist.

Derartige Ladezustandsanzeiger beruhen auf der Tatsache, dass sich das spezifische Gewicht des Elektrolyten in Abhängigkeit von dem Ladezustand ändert. Das spezifische Gewicht der in dem Kugelführungskanal geführten Kugel ist daher auf das spezifische Gewicht des Elektrolyten abgestimmt, sodass die Kugel bei einer ordnungsgemäßen Ladung der Batterie leichter als der Elektrolyt ist und daher in dem schrägen Kanal aufschwimmt. Ist hingegen die Batterie entladen, fällt das spezifische Gewicht des Elektrolyten unter das der Kugel, sodass die Kugel in dem Kugelführungskanal nach unten absinkt.

Gemäß der DE 25 11 426 C2 ist ein schräger Kugelführungskanal vorgesehen, der an der Spitze des Sichtstabes endet. Schwimmt die Kugel auf, weil die Batterie ausreichend geladen ist, wird die Kugel am Ende des Sichtstabes durch die Beobachtungsfläche am ersten Ende sichtbar. Durch eine farbige Ausbildung der Kugel lässt sich so eine farbige Anzeige (z. B. grün) für den ordnungsgemäßen Ladungszustand realisieren. Durch die Reflektionsfläche am zweiten Ende des Sichtstabes wird ferner ein ausreichender Füllgrad der Batterie mit dem Elektrolyten sichtbar. Ist nämlich der Elektrolytstand soweit abgesunken, dass die Spitze des Sichtstabes nicht mehr in den Elektrolyten eintaucht, bilden die konischen Flächen der Spitze des Sichtstabes eine Grenzfläche mit Luft, wodurch an den konischen Flächen der Spitze des Sichtstabes eine Totalreflektion eintritt, sodass die Spitze als reflektierende Fläche, also hell, erscheint. Ist hingegen der Elektrolytstand ausreichend hoch, ist das Material des Sichtstabes so gewählt, dass die Brechungskoeffizienten des Sichtstabes und des Elektrolyten etwa gleich groß sind, sodass keine Totalreflektion mehr entsteht. Mit der Spitze des Sichtstabes ist somit eine optische Verbindung mit dem (dunklen) Innenraum der Batterie hergestellt, sodass an der Beobachtungsfläche (ohne Kugel) eine dunkle Fläche erscheint. Selbstverständlich ist eine Kugel nur sichtbar, wenn der Elektrolytstand ausreichend hoch ist, da einerseits die Kugel ohne Elektrolyt nicht aufschwimmen kann und andererseits die Reflektionsflächen an der Spitze des Sichtstabes eine Totalreflektion bewirken, also eine Beobachtung in Fortsetzung des Lichtstabes nicht ermöglichen. Erkennbar sind somit drei unterschiedliche Zustände an der Beobachtungsfläche, nämlich "hell" für einen unzureichenden Elektrolytstand, "dunkel" für einen ausreichenden Elektrolytstand bei entladener Batterie und "Farbe der Kugel" für einen ausreichenden Elektrolytstand und einen ausreichenden Ladezustand der Batterie.

Ein Ladezustandsanzeiger der eingangs erwähnten Art ist durch EP 1 120 641 A2 bekannt. Darin ist ein Kugelführungskanal vorgesehen, der für die Führung von zwei Kugeln mit unterschiedlichem spezifischen Gewicht vorgesehen ist. Der Kugelführungskanal hat eine Länge von etwa drei Kugeldurchmessern. Die beiden Kugeln haben unterschiedliche Farben, die von der Farbe des Kugelkäfigs verschieden sind. Im entladenen Zustand der Batterie befinden sich beide Kugeln am unteren Ende des Kugelführungskanals, wodurch die obere Kugel unter der Spitze des Sichtstabes zum Liegen kommt. Ist genügend Elektrolyt vorhanden, ist an der Beobachtungsfläche des Sichtstabes somit die Farbe der oberen Kugel (beispielsweise rot) erkennbar. Diese Farbe zeigt an, dass die Batterie entladen ist. In einem mittleren Ladezustand schwimmt die obere (leichtere) Kugel auf und verschwindet aus dem Sichtfeld der Spitze des Sichtstabes an das obere Ende des Kugelführungskanals, während die untere Kugel noch nicht aufschwimmt, also am unteren Ende des Kugelführungskanals außerhalb des Sichtbereichs des Sichtstabes verbleibt. Bei ausreichendem Elektrolytstand wird nun die Farbe des Gehäuses (z. B. gelb) an der Beobachtungsfläche sichtbar. Ist die Batterie in einem guten Ladezustand, schwimmt auch die untere Kugel auf und stößt gegen die obere, bereits aufgeschwommene Kugel, wodurch sie unterhalb der Spitze des Sichtstabes positioniert wird. An der Beobachtungsfläche ist die Farbe der unteren Kugel (z. B. grün) als Signal für einen guten Ladezustand sichtbar.

Ist der Elektrolytstand hingegen abgefallen, sodass er keinen Kontakt mehr zum Sichtstab hat, entsteht in der Beobachtungsfläche wegen der Totalreflektion an den konischen Reflektionsflächen der Spitze des Sichtstabes eine farblose, helle Anzeige, da das durch den Lichtstab einfallende Licht an der konischen Reflektionsfläche totalreflektiert wird.

Bei einem derartigen Ladezustandsanzeiger bewegen sich die Kugeln somit an einer Kontaktlinie der oberen Begrenzungswand des Kugelführungskanals, der mit einem beliebigen Querschnitt, insbesondere kreisförmig oder quadratisch, ausgebildet sein kann und für eine definierte seitliche Führung der Kugeln sorgen muss. Die obere Begrenzungswand des Kugelführungskanals ist durch eine Ausnehmung unterbrochen, in die die Spitze des Sichtstabes ragt. Die punktförmige Spitze kommt dabei etwa auf der gedachten Verlängerungslinie der oberen Begrenzungswand zu liegen. Der Winkel der konischen Reflektionsflächen ist deutlich größer als der Neigungswinkel des schrägen Kugelführungskanals. Im Betrieb eines derartigen Ladezustandsanzeigers kann es vorkommen, dass keine eindeutigen Anzeigen entstehen, weil die Kugel nicht in der gewünschten Weise vollständig aufschwimmen, sondern im Kugelführungskanal hängen bleiben. So kann es sogar vorkommen, dass in der Beobachtungsfläche eine teils rote, teils grüne Anzeige zu erkennen ist. Im Allgemeinen lässt sich dies durch Klopfen auf den Sichtstab beheben. Kritisch ist allerdings, wenn eine durch eine hängen gebliebene Kugel entstandene Fehlanzeige nicht erkannt und durch Schütteln oder Klopfen behoben wird.

Der Erfindung liegt daher die Aufgabe zugrunde, die Anzeige eines Ladezustandsanzeigers der eingangs erwähnten Art störungsunanfälliger zu gestalten.

Zur Lösung dieser Aufgabe ist eine Ladezustandsanzeiger der eingangs erwähnten Art erfindungsgemäß dadurch gekennzeichnet, dass sich die obere Begrenzungswand an die konische Reflektionsfläche am Übergang zur zylindrischen Mantelfläche stufenlos anschließt.

Der Erfindung liegt die Erkenntnis zugrunde, dass eine Ursache für das Hängenbleiben der Kugel nicht in den durch die geringen Unterschiede des spezifischen Gewichts geringen Auftriebskräften zu suchen ist, die beispielsweise Adhäsionskräfte nicht überwinden, sondern in erster Linie in dem oberhalb der punktförmigen Spitze des Sichtstabes mit der oberen Begrenzungswand des Kugelführungskanals gebildete Raum, der insbesondere durch die unterschiedlichen Steigungswinkel des Kugelführungskanals einerseits und der konischen Reflektionsfläche des Sichtstabes andererseits gebildet ist. Hierdurch entsteht für die linienförmige Führung der aufschwimmenden Kugel eine stufenförmige Kante, an der die Kugel beim Aufschwimmen hängen bleiben kann. Erfindungsgemäß schließt sich die obere Begrenzungswand nunmehr stufenlos an die konische Reflektionsfläche an. Hierzu ist der Winkel der konischen Reflektionsfläche vorzugsweise genau gleich dem Steigungswinkel des Kugelführungskanals, sodass die obere Begrenzungswand mit der konischen Reflektionsfläche fluchtet. Selbstverständlich sind geringfügige Winkelabweichungen von wenigen Winkelgeraden (< 10°) unschädlich.

Der Anschluss der oberen Begrenzungswand an die konische Reflektionsfläche sollte mit einem möglichst geringen Zwischenraum erfolgen, der jedenfalls weniger als ¼ des Kugeldurchmessers, vorzugsweise weniger als 1/10 des Kugeldurchmessers, beträgt. In der Praxis lässt sich ein praktisch zwischenraumfreier Anschluss realisieren.

Die erfindungsgemäße Konstruktion gelingt vorzugsweise dadurch, dass der Durchmesser der zylindrischen Mantelfläche des Sichtstabes am zweiten Ende stufenförmig verkleinert ausgebildet ist, sodass der Sichtstab an der in der Mantelfläche gebildeten Stufe an einer entsprechenden Ringschulter des Kugelkäfigs einsetzbar ist und so der stufenlose Übergang der konischen Reflektionsfläche mit der oberen Begrenzungswand möglich ist. Demgegenüber war bei den bekannten Ausführungsformen vorgesehen, die ringförmige Schulter des Kugelkäfigs an die Steigung der konischen Reflektionsfläche anzupassen, um so das definierte Einsetzen des Sichtstabes in den Kugelkäfig zu ermöglichen. Hieraus resultierte die Notwendigkeit, den Winkel der konischen Reflektionsfläche deutlich größer als den Steigungswinkel des Kugelführungskanals auszubilden.

Es hat sich ferner gezeigt, dass es zweckmäßig ist, die Spitze des Sichtstabes und die an den Sichtstab grenzenden Kanten der oberen Begrenzungswand abgerundet auszubilden, da die Kugeln vorzugsweise an scharfen Kanten und Spitzen hängen bleiben.

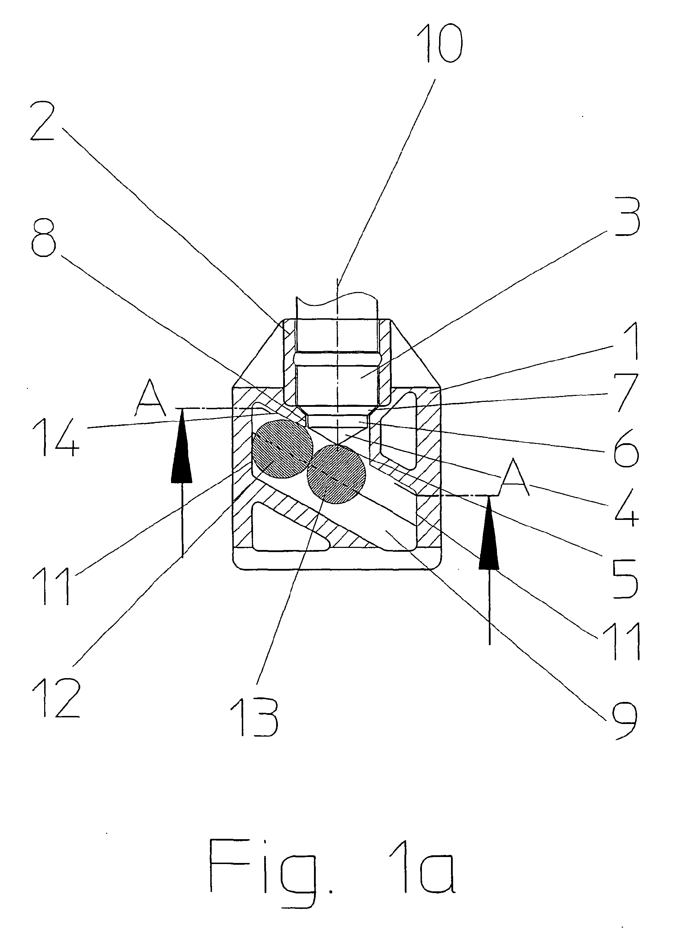

Die Erfindung soll im Folgenden anhand eines in der Zeichnung dargestellten Ausführungsbeispiels näher erläutert werden. Es zeigen
- **Figur 1a**: einen Vertikalschnitt durch einen Kugelkäfig mit einer eingesetzten Spitze eines Sichtstabes

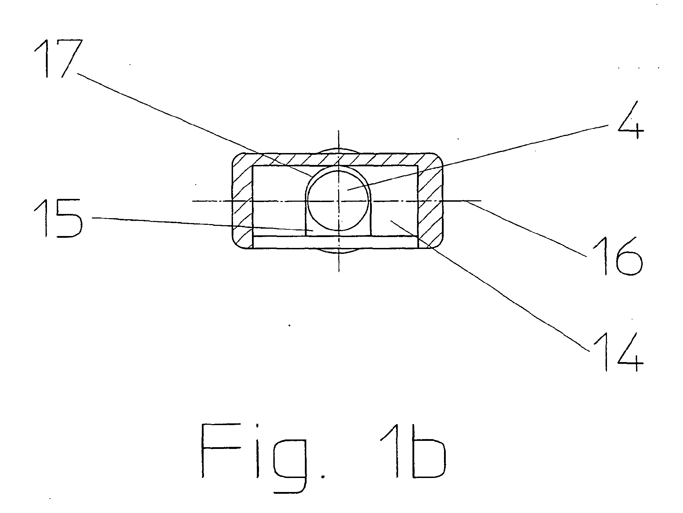

- **Figur 1b**: einen gestuften Horizontalschnitt entlang der Linie A-A in Figur 1a

Figur 1a lässt einen von einem Elektrolyten durchströmbaren Kugelkäfig 1 erkennen, der eine zylindrische Aufnahme 2 für einen Sichtstab 3 aufweist. Der Sichtstab ist an seinem unteren Ende mit einer kegelförmigen, konischen Reflektionsfläche 4 versehen, die in einer punktförmigen Spitze 5 endet. Der Sichtstab 3 weist eine kreiszylindrische Mantelfläche 6 auf, die zur konischen Reflektionsfläche 4 hin über eine Stufe 7 mit einem verkleinerten Durchmesser versehen ist. Eine entsprechend verhängte Führung 8 ist im Kugelkäfig 1 vorgesehen.

Der Kugelkäfig 1 weist einen Kugelführungskanal 9 auf, der mit einer Längsachse 10 des Sichtstabes 3 einen Winkel von etwa 45° bildet und durch stirnseitige Wände 11 in seiner Länge begrenzt ist. In dem Kugelführungskanal 9 befindet sich eine erste Kugel 12 und eine zweite Kugel 13. Die Kugeln sind vorzugsweise gleich groß ausgebildet und weisen unterschiedliche Farben auf. Die erste Kugel 12 ist vorzugsweise rot, die zweite Kugel 13 vorzugsweise grün ausgebildet.

Das Gehäuse des Kugelkäfigs 1 ist vorzugsweise ebenfalls farbig, insbesondere gelb ausgeführt. Die erste Kugel 12 weist ein geringeres spezifisches Gewicht als die zweite Kugel 13 auf. Bei zunehmender Dichte des Elektrolyten schwimmt somit die erste Kugel 12 zunächst auf, während die zweite Kugel 13 noch in ihrer unteren Ruhestellung verbleibt. Steigt die Dichte des Elektrolyten beim Laden weiter an, schwimmt auch die zweite Kugel 13 auf.

Die Länge des Kugelführungskanals 9 beträgt drei Durchmesser der gleich großen Kugeln 12, 13.

Die obere Begrenzungswand 14 weist eine Ausnehmung 15 auf, in die das Ende des Sichtstabes 3 ragt. Das Ende des Sichtstabes 3 ist in die Ausnehmung 15 so eingesetzt, dass von der Spitze 9 nach oben hin die konische Reflektionsfläche 6 stufenlos in die obere Begrenzungswand 14 des Kugelführungskanals 9 übergeht. Wie Figur 1b, die eine Ansicht der oberen Begrenzungswand 14 von unten bietet, verdeutlicht, schließt sich die obere Begrenzungswand 14 an die konische Reflektionsfläche 4 auf einer Führungslinie 16 praktisch ohne Zwischenraum an.

Neben dem stufenlosen und zwischenraumlosen Übergang ist vorzugsweise der Winkel der konischen Reflektionsfläche 4 identisch mit dem Steigungswinkel der oberen Begrenzungswand 14 des Kugelführungskanals 9, sodass konische Reflektionsfläche 4 und obere Begrenzungswand 14 auf der Führungslinie 16 vollständig bis zur Spitze 5 miteinander fluchten.

Figur 1b lässt eine Kante 17 der Ausnehmung 15 erkennen. Diese Kante 17 sowie die Spitze 5 können vorzugsweise etwas abgerundet ausgebildet sein, um scharfe Kanten auf der Führungslinie 16 der Kugeln 12, 13 zu vermeiden.

## Patentansprüche

1. Ladezustandsanzeiger für eine mit einem flüssigen Elektrolyten ausgestattete Batterie, mit einem transparenten Sichtstab (3), der an einem ersten Ende eine Beobachtungsfläche und an einem zweiten Ende eine sich an eine zylindrische Mantelfläche (6) anschließende, durch eine konische Reflektionsfläche (4) gebildete Spitze (5) aufweist, und mit einem am zweiten Ende des Sichtstabes (3) angebrachten, vom Elektrolyten durchströmbaren Kugelkäfig (1), in dem wenigstens ein schräg zur Längsachse (10) des Sichtstabes (3) angeordneter Kugelführungskanal (9) für wenigstens eine Kugel (12, 13) mit einem definierten spezifischen Gewicht ausgebildet ist, der sich über die Höhe der Spitze (5) des Sichtstabes (3) erstreckt und stirnseitige und untere Begrenzungen sowie eine mit einer Unterbrechung (15) für das zweite Ende des Sichtstabes (3) versehene obere Begrenzungswand (14) aufweist, **dadurch gekennzeichnet, dass** sich die obere Begrenzungswand (14) an die konische Reflektionsfläche (4) am Übergang zur zylindrischen Mantelfläche (6) stufenlos anschließt.

2. Ladezustandsanzeiger nach Anspruch 1, **dadurch gekennzeichnet, dass** ein Abstand zwischen der oberen Begrenzungswand (14) und der konischen Reflektionsfläche (4) weniger als ¼ des Durchmessers einer Kugel (12, 13) beträgt.

3. Ladezustandsanzeiger nach Anspruch 2, **dadurch gekennzeichnet, dass** der Abstand weniger als ¹/₁₀ des Durchmessers einer Kugel (12, 13) beträgt.

4. Ladezustandsanzeiger nach einem der Ansprüche 1 bis 3, **dadurch gekennzeichnet, dass** die obere Begrenzungswand (14) mit der konischen Reflektionsfläche (4) fluchtet.

5. Ladezustandsanzeiger nach einem der Ansprüche 1 bis 4, **dadurch gekennzeichnet, dass** der Durchmesser der zylindrischen Mantelfläche (6) des Sichtstabes (3) am zweiten Ende stufenförmig verkleinert ausgebildet ist.

6. Ladezustandsanzeiger nach einem der Ansprüche 1 bis 5, **dadurch gekennzeichnet, dass** die Spitze (5) des Sichtstabes (3) abgerundet ausgebildet ist.

7. Ladezustandsanzeiger nach einem der Ansprüche 1 bis 6, **dadurch gekennzeichnet, dass** die an den Sichtstab (3) grenzenden Kanten (17) der oberen Begrenzungswand (14) abgerundet ausgebildet sind.

8. Ladezustandsanzeiger nach einem der Ansprüche 1 bis 7, **dadurch gekennzeichnet, dass** sich in dem Kugelführungskanal (9) zwei Kugeln (12, 13) mit unterschiedlichen spezifischen Gewichten befinden.

9. Ladezustandsanzeiger nach einem der Ansprüche 1 bis 8, **dadurch gekennzeichnet, dass** der sich über den Sichtstab (3) hinaus erstreckende Abschnitt des Kugelführungskanals (9) eine Länge aufweist, die dem Durchmesser der als obere Kugel eingesetzten Kugel (12) mit dem geringeren spezifischen Gewicht entspricht.

10. Ladezustandsanzeiger nach Anspruch 8 oder 9, **dadurch gekennzeichnet, dass** die Kugeln (12, 13) gleiche Abmessungen aufweisen.

11. Ladezustandsanzeiger nach Anspruch 9 und 10, **dadurch gekennzeichnet, dass** die Länge des Kugelführungskanals (9) dem Dreifachen des Durchmessers der Kugeln (12, 13) entspricht.

12. Ladezustandsanzeiger nach einem der Ansprüche 1 bis 11, **dadurch gekennzeichnet, dass** der Durchmesser der zylindrischen Mantelfläche (6) am Übergang zur konischen Reflektionsfläche (4) dem Durchmesser der Kugel (12, 13) entspricht.

## Claims

1. State of charge indicator for a battery which is equipped with a liquid electrolyte, having a transparent viewing rod (3), which has an observation surface at a first end and has a tip (5), which is adjacent to a cylindrical outer surface (6) and is formed by a conical reflection surface (4), at a second end, and having a ball cage (1) which is fitted to the second end of the viewing rod (3) and through which the electrolyte can flow, and in which at least one ball guide channel (9), which is arranged obliquely with respect to the longitudinal axis (10) of the viewing rod (3), is formed for at least one ball (12, 13) with a defined relative density, which extends over the height of the tip (5) of the viewing rod (3) and has end-face and lower boundaries as well as an upper boundary wall (14) which is provided with an interruption (15) for the second end of the viewing rod (3), **characterized in that** the upper boundary wall (14) is smoothly connected to the conical reflection surface (4) at the junction to the cylindrical outer surface (6).

2. State of charge indicator according to claim 1, **characterized in that** a distance between the upper boundary wall (14) and the conical reflection surface (4) is less than ¼ of the diameter of a ball (12, 13).

3. State of charge indicator according to claim 2, **characterized in that** the distance is less than 1/10 of the diameter of a ball (12, 13).

4. State of charge indicator according to one of claims 1 to 3, **characterized in that** the upper boundary wall (14) is aligned with the conical reflection surface (4).

5. State of charge indicator according to one of claims 1 to 4, **characterized in that** the diameter of the cylindrical outer surface (6) of the viewing rod (3) is designed such that it is reduced in size in steps at the second end.

6. State of charge indicator according to one of claims 1 to 5, **characterized in that** the tip (5) of the viewing rod (3) is rounded.

7. State of charge indicator according to one of claims 1 to 6, **characterized in that** the edges (17) of the upper boundary wall (14) which are adjacent to the viewing rod (3) are rounded.

8. State of charge indicator according to one of claims 1 to 7, **characterized in that** two balls (12, 13) with different relative densities are located in the ball guide channel (9).

9. State of charge indicator according to one of claims 1 to 8, **characterized in that** the section of the ball guide channel (9) which extends beyond the viewing rod (3) has a length which corresponds to the diameter of the ball (12) which is used as the upper ball and has the lower relative density.

10. State of charge indicator according to claim 8 or 9, **characterized in that** the balls (12, 13) have the same dimensions.

11. State of charge indicator according to claims 9 and 10, **characterized in that** the length of the ball guide channel (9) corresponds to three times the diameter of the balls (12, 13).

12. State of charge indicator according to one of claims 1 to 11, **characterized in that** the diameter of the cylindrical outer surface (6) at the junction to the conical reflection surface (4) corresponds to the diameter of the ball (12, 13).

## Revendications

1. Indicateur d'état de charge d'une batterie à électrolyte liquide, ayant une tige de visualisation (3) transparente, dont une première extrémité a une surface d'observation et une seconde extrémité a une pointe (5) adjacente à la surface-enveloppe cylindrique (6), formée par une surface de réflexion (4), conique, ainsi qu'une cage à billes (1), traversée par l'électrolyte, et prévue à la seconde extrémité de la tige de visualisation (3),
cage ayant au moins un canal de guidage de billes (9), incliné par rapport à l'axe longitudinal (10) de la tige de visualisation (3) pour au moins une bille (12, 13), ayant une densité définie, s'étendant sur la hauteur de la pointe (5) de la tige de visualisation (3) et ayant côté frontal avec des limitations inférieures ainsi qu'une paroi de limitation supérieure (14), munie d'une interruption (15) pour la seconde extrémité de la tige de visualisation (3),
**caractérisé en ce que**
la paroi limite supérieure (14) rejoint de façon continue la surface de réflexion conique (4) à la jonction de la surface-enveloppe cylindrique (6).

2. Indicateur d'état de charge selon la revendication 1,
**caractérisé en ce que**
la distance entre la paroi limite supérieure (14) et la surface de réflexion conique (4) est inférieure à 1/4 du diamètre d'une bille (12, 13).

3. Indicateur d'état de charge selon la revendication 2,
**caractérisé en ce que**
la distance est inférieure à 1/10 du diamètre d'une bille (12, 13).

4. Indicateur d'état de charge selon l'une des revendications 1 à 3,
**caractérisé en ce que**
la paroi limite supérieure (14) est alignée sur la surface de réflexion conique (4).

5. Indicateur d'état de charge selon l'une des revendications 1 à 4,
**caractérisé en ce que**
le diamètre de la surface-enveloppe cylindrique (6) de la tige de visualisation (3) présente une seconde extrémité diminuant de façon étagée.

6. Indicateur d'état de charge selon l'une des revendications 1 à 5,
**caractérisé en ce que**
la pointe (5) de la tige de visualisation (3) est arrondie.

7. Indicateur d'état de charge selon l'une des revendications 1 à 6,
**caractérisé en ce que**
les jonctions (17) de la paroi limite supérieure (14) à la tige de visualisation (3) sont arrondies.

8. Indicateur d'état de charge selon l'une des revendications 1 à 7,
**caractérisé en ce que**
le canal de guidage de billes (9) reçoit deux billes (12, 13) de densités différentes.

9. Indicateur d'état de charge selon l'une des revendications 1 à 8,
**caractérisé en ce que**
le segment du canal de guidage de bille (9) qui s'étend au-delà de la tige de visualisation (3) a une longueur correspondant au diamètre de la bille supérieure (12) de densité plus faible.

10. Indicateur d'état de charge selon la revendication 8 ou 9,
**caractérisé en ce que**
les billes (12, 13) ont les mêmes dimensions.

11. Indicateur d'état de charge selon les revendication 9 et 10,
**caractérisé en ce que**
la longueur du canal de guidage de billes (9) est le triple du diamètre des billes (12, 13).

12. Indicateur d'état de charge selon l'une des revendication 1 à 11,
**caractérisé en ce que**
le diamètre de la surface-enveloppe cylindrique (6) à la jonction avec la surface de réflexion conique (4) correspond au diamètre des billes (12, 13).
